# EUROPEAN PATENT SPECIFICATION

(11) **EP 1 384 568 B1**
(45) Date of publication and mention of the grant of the patent: **15.02.2006**
(21) Application number: 02291901.3
(22) Date of filing: 26.07.2002
(51) Int. Cl.: B29D 31/518, A43B 5/16

(54) **Skate boot**
Schlittschuh
Bottine de patin

(43) Date of publication of application: 28.01.2004
(60) Divisional application: 05076900.9
(73) Proprietor: Bauer Nike Hockey Inc., St-Jérôme, Québec J7Z 5T5 (CA)
(72) Inventor: Labonte, Ivan, Montréal, Québec H2G 2C4 (CA); Langevin, Chris, Prévost, Québec J0R 1P0 (CA)
(74) Representative: Burbaud, Eric

(56) References cited:
- EP-A- 1 016 353
- EP-A- 1 149 541
- DE-C- 617 365
- DE-U- 9 400 085
- FR-A- 2 741 542
- GB-A- 1 141 836
- US-A- 4 783 911
- US-A- 6 112 434
- US-A1- 2002 071 946

## Description

### Field of the invention

The invention relates to a lasted skate boot for ice skates or in-line roller skates and more particularly to a lasted skate boot comprising an upper having a molded outer shell and an inner lining mounted inside the outer shell.

### Background of the invention

Typical skate boots are fabricated by assembling together previously die-cut pieces of textile material and shaping them over a last. Various pieces of textiles or fabrics are cut to specific patterns, which are then pre-assembled by stitching or gluing or both into a multi-layer construction. The rigidity and flexibility characteristics of the skate boot are defined by the various layers of materials being positioned and layered in specific regions of the pre-assembled component of the skate boot. The accumulation of pieces of material into layers and the mechanical properties of each piece of textile or fabric material define the overall dynamic behavior of the skate boot. Usually, the pre-assembled component further includes rigid components generally made of plastic to increase the rigidity of specific area of the skate boot. The pre-assembled boot generally consists of the back and sides of the skate boot and a toe cap and tongue assembly. The pre-assembled boot has the general configuration of the finished product but has not yet been shaped to the final form of the skate boot.

The pre-assembled component is positioned over a last and formed to obtain the shape of the desired finished product. A last is a three-dimensional shape of the inside cavity of a boot. The pre-assembled boot may be mounted upside down onto the last for ease of manipulation and assembly of the remaining components making up the skate boot.

An insole is placed on the top part of the upside down last and the pre-assembled boot is stretched over the last and over the insole in order for the pre-assembled boot to conform to the specific shape of the last. The stretched material is then glued and nailed or tacked to the insole to maintain the desired shape.

Once the upper part of the skate boot is completed, a rigid outsole is secured to the insole of the boot to complete the skate boot. An ice skate blade holder or an in-line roller chassis is finally mounted to the bottom of the boot to complete the skate.

This type of process is extensively used in the shoemaking industry. It generates a good product but has some disadvantages. For instance, the number of parts involved in the multi-layer construction can be staggering; a conventional ice skate for hockey may have up to eighty parts to be assembled and shaped over the last. As a consequence, the manufacturing process is lengthy and complex.

Document EP-A-1 149 541 discloses the features of the preamble of claim 1 and claim 17.

There is a need in the industry for a skate boot made of fewer components than the traditionally made skate boot and which is lighter than the traditionally made skate boot.

There is also a need for a skate boot, which provides flexibility and durability as well as optimal performance.

### Summary of the Invention

The invention seeks to provide a lasted skate boot as defined in claim 1 and a method of making a lasted skate boot as defined in claim 17.

### Brief description of the drawings

A detailed description of the preferred embodiments of the present invention is provided herein below, by way of example only, with reference to the accompanying drawings, in which:
Figure 1 is a perspective view illustrating a male-female mold for forming an outer shell according to the invention;
Figure 2 is a perspective view illustrating a second male-female mold for forming the outer shell;
Figure 3 is a perspective view illustrating a third male-female mold for forming the outer shell;
Figure 4 is a perspective view illustrating a fourth male-female mold for forming the outer shell;
Figure 5 is a rear elevational view of the outer shell shown in an unfolded position;
Figure 6 is a cross-sectional view of the outer shell taken at line 6-6 of Figure 5;
Figure 7 is a perspective view of the outer shell shown in a folded position;
Figure 8 is a cross-sectional view of the outer shell taken at line 8-8 of Figure 7;
Figure 9 is a rear elevational view of the outer shell shown in a folded position;
Figure 10 is a perspective view of the outer shell shown in a folded position;
Figure 11 is an exploded perspective view illustrating an ice skate incorporating the outer shell constructed in accordance with the invention;
Figure 12 is a perspective view illustrating the upper constructed in accordance with the invention with a last and an insole;
Figure 13 is a perspective view of an ice skate incorporating the skate boot constructed in accordance with the invention;
Figure 14 is a perspective view of a human foot with the contour of the foot in stippled lines and the bones in plain lines; and
Figure 15 is a front elevational view of the foot of Figure 14.

In the drawings, preferred embodiments of the invention are illustrated by way of examples. It is to be expressly understood that the description and drawings are only for the purpose of illustration and are an aid for understanding. They are not intended to be a definition of the limits of the invention.

### Detailed description of preferred embodiments

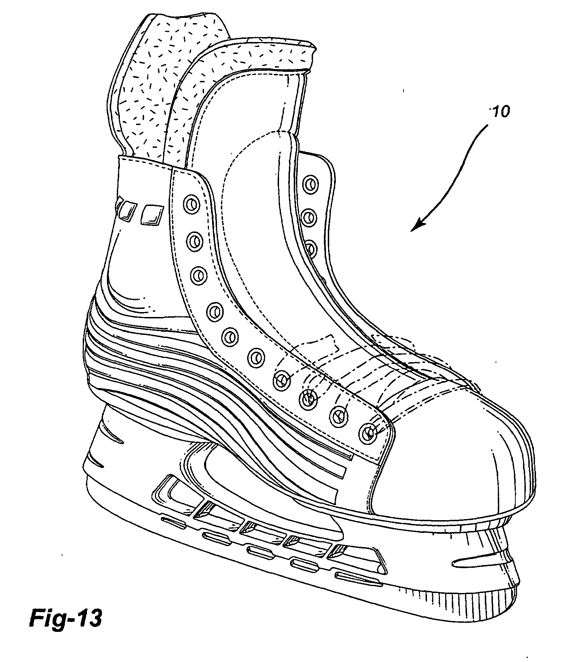

A skate boot manufactured in accordance with the present invention is illustrated generally by reference numeral 10 in Figure 13.

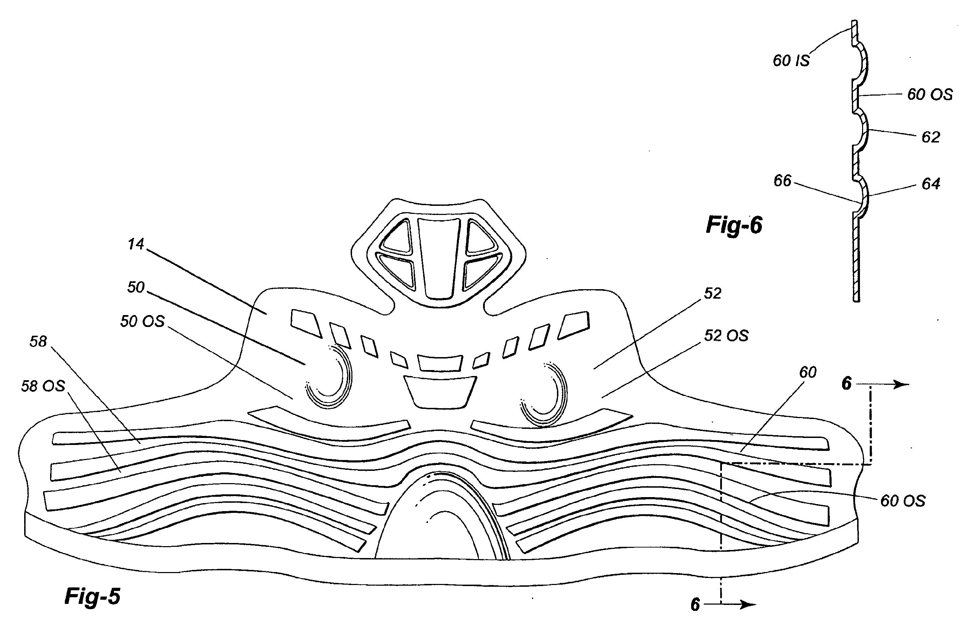

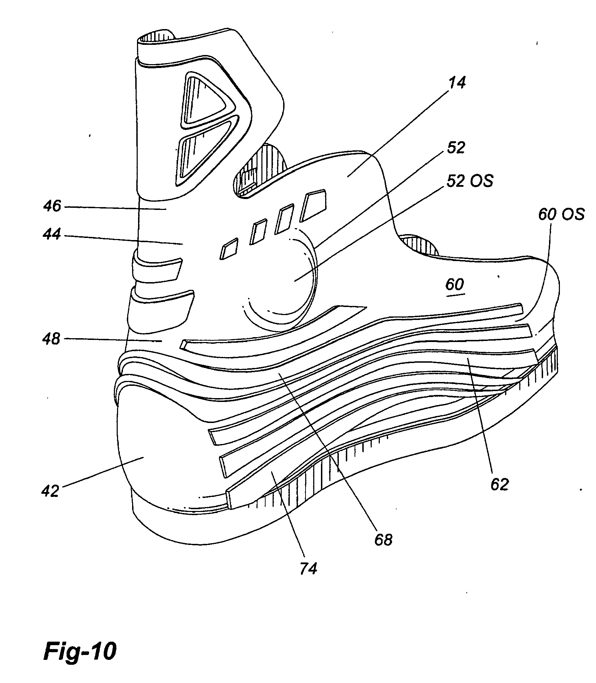

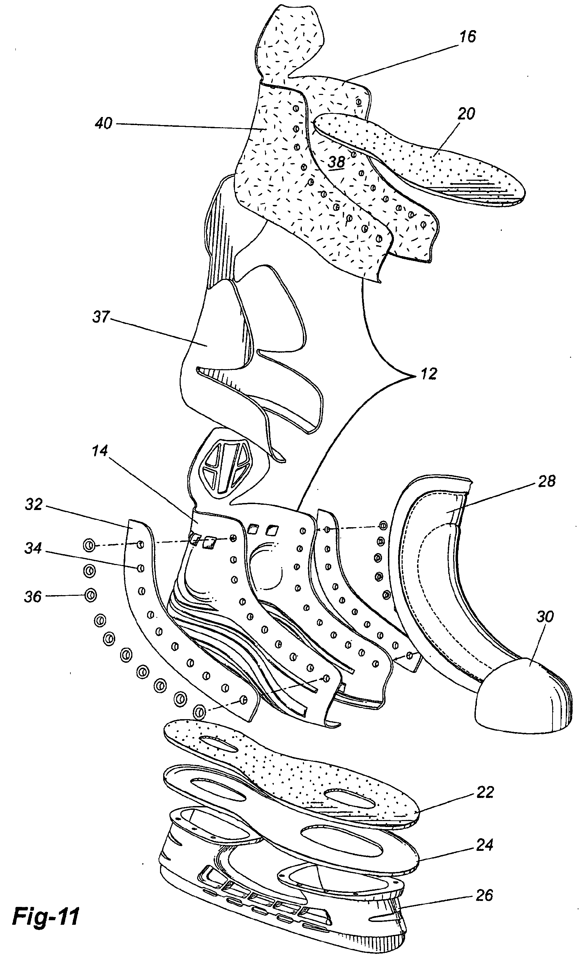

Referring to Figure 11, skate boot 10 comprises an upper 12 for enclosing a human foot. Upper 12 comprises an outer shell 14 and an inner lining 16 mounted inside outer shell 14. Outer shell 14 illustrated in Figures 5 to 11 is for use in a skate boot for a right foot.

Outer shell 14 is molded of synthetic material. More particularly, outer shell 14 is made by thermo-pressured molding of a suitable thermoforming material initially in uniform thickness sheet form such as a pre-cut sheet having a desired contour, the sheet being made of thermoforming materials such as those sold under the trade-mark MEGABIX® (a core of extruded SURLYN®, a backing of SONTARA® and a hot melt coating; thickness of 0.95 mm), FORMO500® (non woven polyester with a core of extruded polyolefinic, stiffening layers of synthetic latex on each side and an ethylene vinyl acetate hot melt adhesive on one side; thickness of 1.50 mm), BYLON® (a nylon multifilament with a backing of black saturated needle punched polyester nonwoven and a face coating of non-fray urethane) and MOSOCA® (NYLON® 66 with a core of SURLYN® and a PU coating).

Outer shell 14 can be made of a homogenous thermoforming synthetic material or can be made of layers of different thermoforming synthetic materials. For example, outer shell 14 may comprise two layers, the material of the outer layer of shell 14 being more rigid, or more resistant to abrasion, than the material of the inner layer of shell 14. More specifically, outer layer of shell 14 can be made of a pre-cut sheet of MOSOCA® and inner layer of shell 14 can be made of a pre-cut sheet of polystyrene, both sheets being molded together. A pre-cut sheet of polyethylene or polyurethane may also be used for inner layer of shell 14. The outer and inner layers may be stitched together before or after the molding operation if desired.

Inner lining 16 is made of a soft material and has an inner surface 38 and an outer surface 40. Inner lining can be a fabric made of 100% nylon fibers. Inner surface 38 is intended to contact the skin of the foot in use. Outer surface 40 of inner lining 16 is secured to outer shell 14 by affixing means such as glue, stitches, nails, adhesives or tacks. It is understood that inner lining 16, being made of a soft material, is less rigid than outer shell 14 that is molded of synthetic material being sufficiently rigid for supporting the foot.

Skate boot 10 also includes a footbed 20, an insole 22 facing the plantar surface of the foot and an outsole 24 secured to insole 22. Insole 22 is secured to outer shell 14 with a fastener such as stitches, glue, nails, adhesives or tacks. An ice skate blade holder 26 is secured to outsole 24. It is understood that an in-line roller chassis may also be secured to outsole 24. Insole 22 and outsole 24 have apertures for allowing access to a locking mechanism of the ice skate blade with ice skate blade holder 26 (not illustrated).

Skate boot 10 also comprises a tongue 28 and a toe box 30 facing the toes of the foot. Tongue 28 extends upwardly and rearwardly from toe box 30 and covers the upper front portions of the foot and the ankle. Preferably, toe box 30 and tongue 28 are pre-assembled prior to installing into outer shell 14. The frontal edge of tongue 28 is sewn directly to toe box 3 0, and then both sides of toe box 3 0 are secured to outer shell 14 with a fastener such as stitches, glue, nails, adhesives or tacks. Toe box 30 may also be glued, nailed or tacked to outer shell 14.

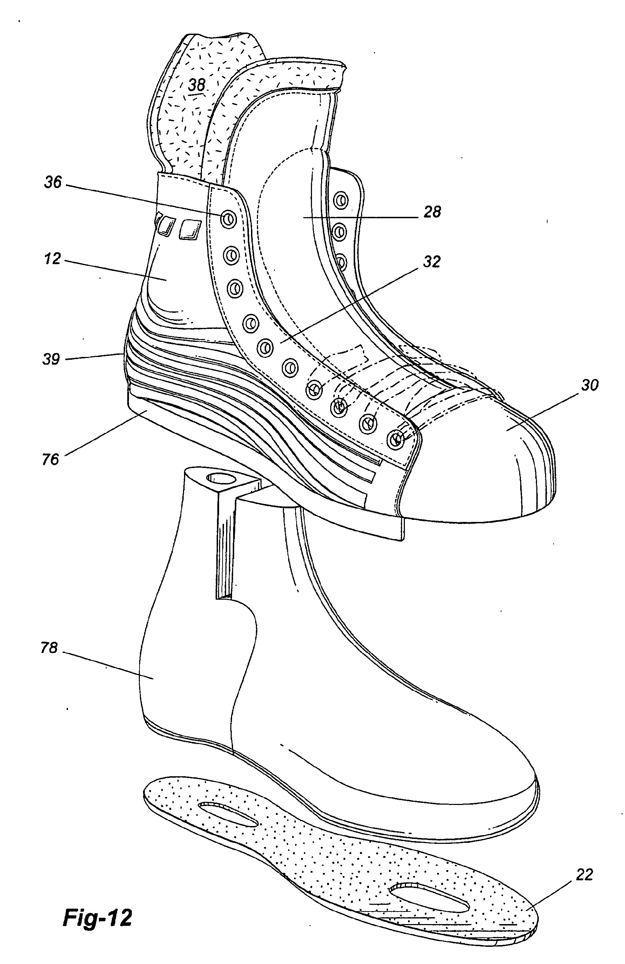

Skate boot 10 also comprises a band 32 secured to an upper portion of outer shell 14, band 32 being made of fabric, textile or leather and comprising apertures 34. Eyelets 36 are punched into band 32, outer shell 14 and inner lining 16 vis-a-vis apertures 34. It is understood that the skate boot may comprise lacing loops and/or eyelets 36. Skate boot 10 may comprise a rigid insert 37 that provides more rigidity in the ankle and heel portions of skate boot 10 and which is sandwiched between outer shell 14 and inner lining 16. Skate boot 10 may also comprise a protective overlay recovering a portion of upper 12 or a rear cover 39 secured to a rear portion of outer shell 14 (see Figure 12). Protective overlay and rear cover 39 may be made of fabric, textile or leather.

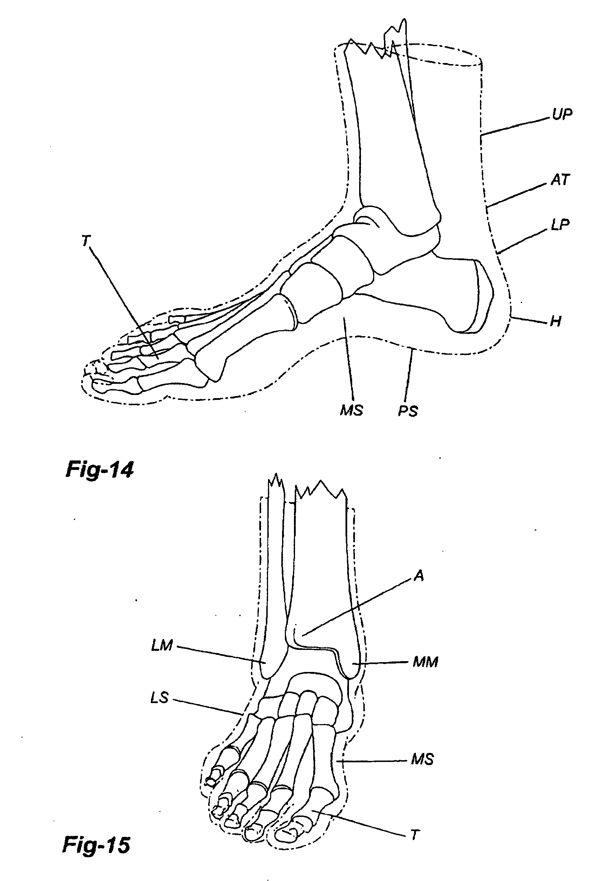

A typical human foot is shown in Figures 14 and 15. The human foot has a heel H, an Achilles tendon AT having an upper part UP and a lower part LP that projects outwardly with relation to upper part UP, lower part LP merging with heel H.

The foot also comprises a plantar surface PS, a medial side MS, a lateral side LS, toes T, and an ankle A with a medial malleolus MM and a lateral malleolus LM, lateral malleolus LM being below than medial malleolus MM.

Referring to Figures 5 to 10, outer shell 14 is formed of a heel counter 42 receiving heel H, an ankle portion 44 receiving ankle A and medial and lateral quarters 58, 60 receiving medial and lateral sides MS, LS of the foot respectively. Medial and lateral quarters 58, 60 extend forwardly from heel counter 42 and ankle portion 44. Medial quarter 58 comprises inner and outer surfaces 58IS and 58OS and lateral quarter 60 comprises inner and outer surfaces 60IS and 60OS.

Ankle portion 44 comprises an upper part 46 and a lower part 48 that projects outwardly with relation to upper part 46, lower part 48 merging with heel counter 42. Ankle portion 44 is formed for following the rear profile of Achilles tendon AT. More specifically, upper part 46 of ankle portion 44 follows upper part UP of Achilles tendon AT and lower part 48 of ankle portion 44 follows lower part LP of Achilles tendon AT. Heel counter 42 is substantially cup shaped for following the contour of heel H.

Ankle portion 44 also comprises medial and lateral sides 50, 52. Medial side 50 comprises inner and outer surfaces 50IS, 50OS and lateral side 52 comprises inner and outer surfaces 52IS, 52OS. Medial and lateral sides 50, 52 also comprise medial and lateral depressions 54, 56 respectively. Medial depression 54 receives medial malleolus MM and lateral depression 56 receives lateral malleolus LM, lateral depression 56 is located slightly below medial depression 54 for conforming to the morphology of the foot.

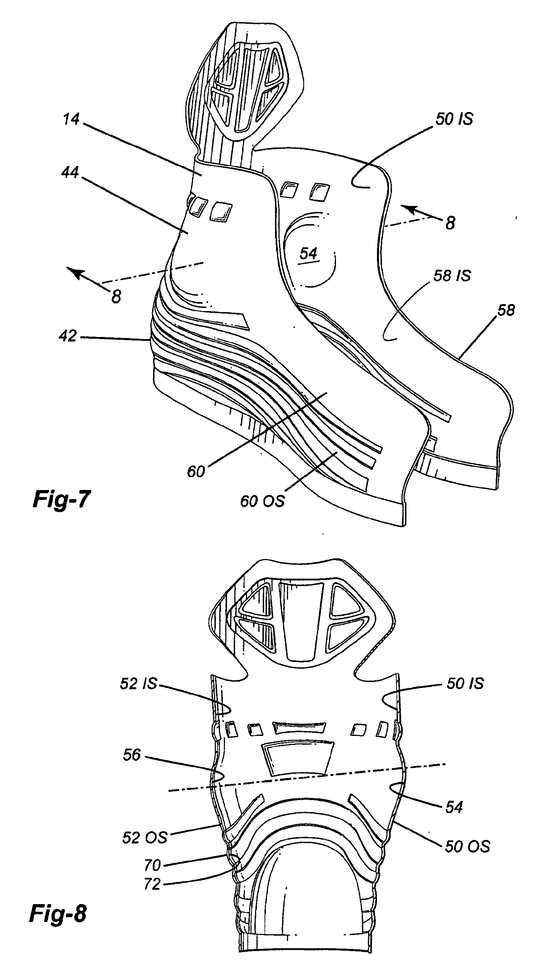

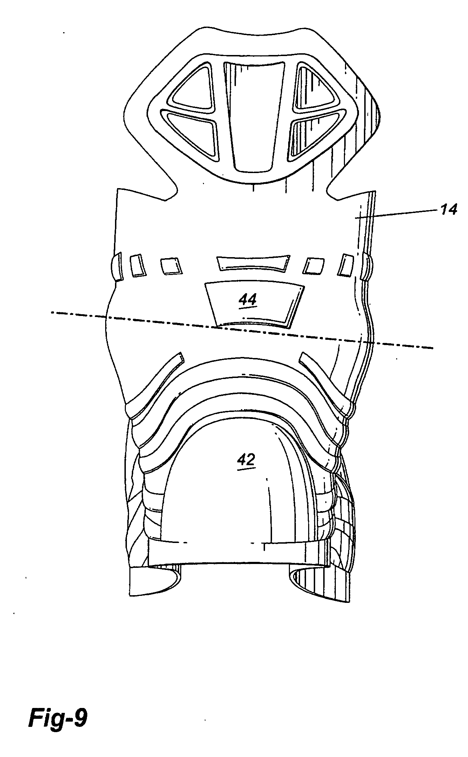

As shown more particularly in Figures 8 and 9, medial and lateral sides 50, 52 of ankle portion 44 and medial and lateral quarters 58, 60 are adapted to conform to the general morphology of the foot. In fact, inner surfaces 50IS, 52IS of ankle portion 44 an inner surfaces 58IS and 60IS of medial and lateral quarters 58, 60 follow the sides of heel H and ankle A, and medial and lateral sides MS, LS of the foot while accounting for statistical variations of the relative position of medial malleolus MM and the lateral malleolus LM.

Medial and lateral quarters 58, 60 comprise quarter reinforcing elements 62 and medial and lateral sides 50, 52 of ankle portion 44 comprise ankle reinforcing elements 68. Referring to Figure 6, quarter reinforcing element 62 comprises a ridge 64 formed on outer surface 60OS of lateral quarter 60 and a groove 66 registering with ridge 64, groove being formed on inner surface 60IS of lateral quarter 60. Referring to Figure 8, ankle reinforcing element 68 comprises a ridge 70 formed on outer surface 52OS of lateral side 52 of ankle portion 44 and a groove 72 registering with ridge 70, groove 66 being formed on inner surface 52IS of lateral side 52 of ankle portion.

Outer shell 14 illustrated in Figures 5 to 13 comprises quarter reinforcing elements 62 that continue with ankle reinforcing elements 68 for forming continuous elongated reinforcing elements on outer shell 14, these continuous elongated reinforcing elements being also formed on the rear portion of ankle portion 44. Outer shell 14 also comprises heel reinforcing elements 74 that are formed on heel counter 42, heel reinforcing elements 74 being continuous with quarter reinforcing elements 62 for forming continuous elongated reinforcing elements on the sides of outer shell 14.

As reinforcing elements 62 and 68, heel reinforcing elements 74 comprise a ridge formed on the outer surface of heel counter 42 and a groove registering with the ridge, the groove being formed on the interior surface of heel counter 42.

It is understood that quarter and ankle reinforcing elements 62, 68 and quarter and heel reinforcing elements 62, 74 may be separate or formed together and their design may be selected for obtaining the desired rigidity, stability and flexibility of skate boot 10. Reinforcing elements 62, 68 and 74 may or may not have the same width and height (or depth) but their pattern is identical for the following aspect: a ridge (or projection) formed on the outer or inner surface of outer shell 14 corresponds to a groove (or depression) that registers with the ridge, the groove being formed on the outer or inner surface of outer shell 14 (naturally, a ridge formed on the outer surface of outer shell 14 corresponds to a registered groove formed on the inner surface of outer shell 14).

It is also understood that the ridge of reinforcing elements 62, 68 and 74 may be formed on the interior surfaces of medial and lateral quarters 58, 60, ankle portion 44 and heel counter 42 respectively while the registered groove of reinforcing elements 62, 68 and 74 may be formed on the outer surfaces.

Reinforcing elements 62, 68 and 74 also protect the foot from impacts due to a puck, a ball or a stick since these elements tend to dissipate the impact energy.

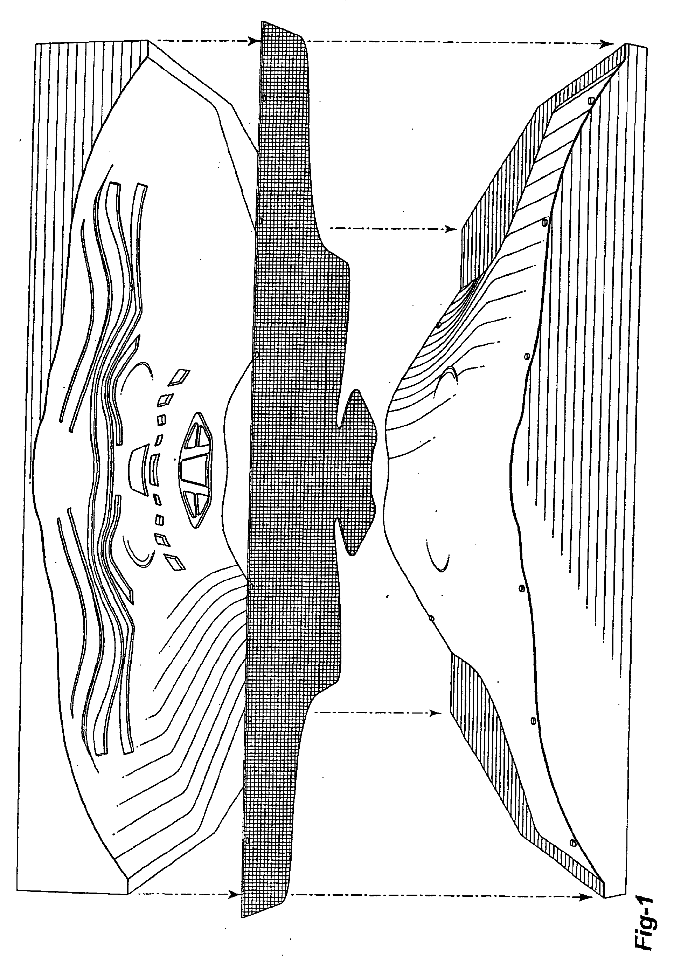

In order to manufacture outer shell 14, a pre-cut sheet of thermoformable synthetic material is inserted into the cavity of one of the male-female mold shown in Figures 1 to 4.

The male and female portions of the molds define the inner and outer surfaces of outer shell 14 respectively. For instance, the male portion of the molds defines inner surfaces 50IS, 52IS of ankle portion 44 and inner surfaces 58IS, 60IS of medial and lateral quarters 58, 60 whereas the female portion of the molds defines outer surfaces 50OS, 52OS of ankle portion 44 an outer surfaces 58OS, 60OS of medial and lateral quarters 58, 60.

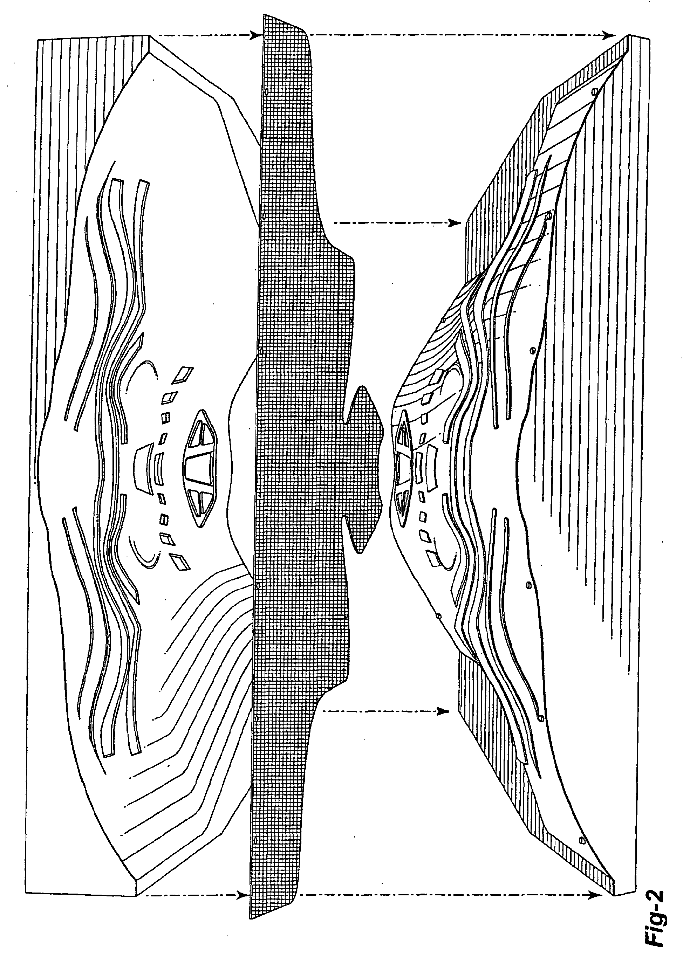

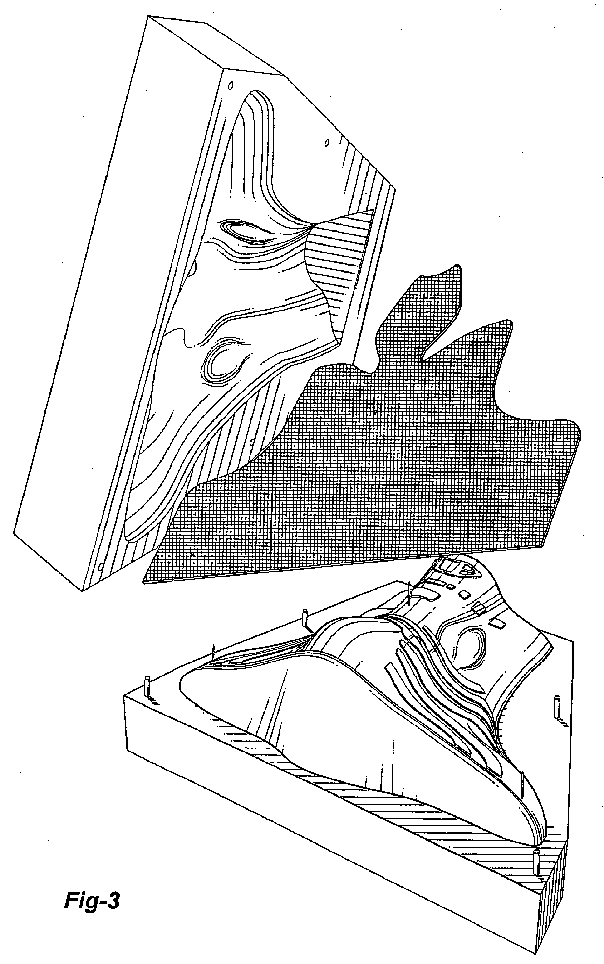

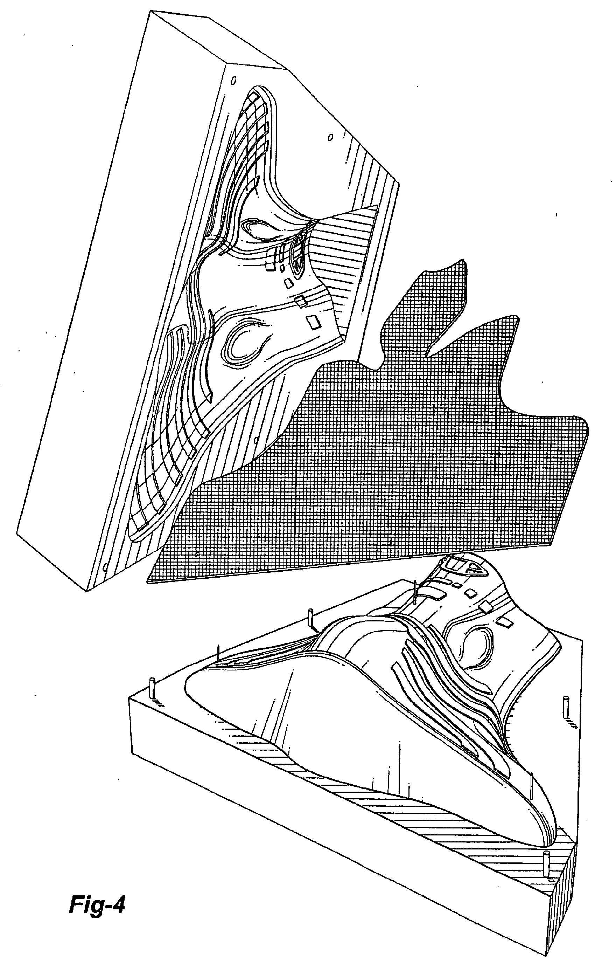

As seen in Figures 2 and 4, grooves and ridges are provided in the female and male portions of the molds while only grooves are provided in the female portion of the mold illustrated in Figure 1 and only ridges are provided on the male portion of the mold illustrated in Figure 3. Due to the presence of ridges in the male portion and grooves in the female portion, the deformation of the synthetic material is more important in the region of the reinforcing elements when using the molds illustrated in Figures 2 and 4. Moreover, the deformation of the synthetic material is less important when using the molds illustrated in Figures 1 and 2 than the molds illustrated in Figures 3 and 4 since the three-dimensional shape of the latter molds is more prominent than the one of the molds illustrated in Figures 1 and 2.

The pre-cut sheet is aligned and temporarily secured to one of the mold portions using any suitable means to accurately position the pre-cut sheet within the mold and maintain same in position when the mold is closed. Once the mold is closed over the pre-cut sheet, the mold is heated up to the thermoforming temperature of the pre-cut sheet and male and female portions are pressed against the pre-cut sheet.

As indicated above, the pre-cut sheet of outer shell 14 may be formed of layers of different thermoforming synthetic materials. It is understood that the pre-cut sheet of outer shell 14 can be molded with the pre-cut sheet of inner lining 16, instead of securing inner lining 16 to outer shell 14 after the molding operation of outer shell 14. Naturally, the material of inner lining 16 must be selected from materials that may sustain the thermoforming temperature of outer shell 14.

In a preferred embodiment of the invention, heat and pressure are applied simultaneously for a period of 15 seconds to 2 minutes after which the mold is allowed to cool down so that the pre-cut sheet will set to the three-dimensional shape defined by the male and female portions of the mold. Preferably, heat and pressure are applied simultaneously for a period of 45 seconds to 1 minute. The applied heat is generally between 250°F (121°C) and 350°F (177°C), with the preferred temperature being approximately 325°F (163°C).

The applied pressure is generally between 75 psi (517Kpa) and 150 psi (1034Kpa), with the preferred pressure being approximately 125 psi (862Kpa). It is understood that the amount of time, temperature and pressure may be different if a cooled mold is used.

By utilizing different grades of thermoformable synthetic material, different thermoformable synthetic materials or the same material with different density, the designers are able to vary the mechanical properties of outer shell 14. Similarly, by utilizing different patterns for reinforcing elements 62, 68 and 74 (i.e. location, number, width, height (or depth) and orientation), the designers are able to vary the mechanical properties of outer shell 14. In that scnsc, using different thermoformable synthetic materials and patterns of reinforcing elements 62, 68 and 74, the designers are thus able to vary the flexibility, rigidity and stability of skate boot 10.

Referring now to Figure 12, outer shell 14 also comprises a lower skirt portion 76 that is foldable to overlap a portion of insole 22. A last 78 is inserted into the inside cavity of upper 12. Last 78 enables upper 12 to maintain its shape when skirt portion 76 is folded to give upper 12 its final shape. Last 78 is inserted into upper 12 and insole 22 is positioned underneath last 78 inside skirt portion 76.

Once the assembly is completed, upper 12 is placed upside down into a lasting machine. Glue is first applied to the bottom surface of insole 22 along its periphery. Skirt portion 76 is then folded over last 78 onto the bottom surface of insole 22, using the lasting machine wipers. Once folded, skirt portion 76 is bonded to insole 22 by the glue that was previously laid on the bottom surface of insole 22. Skirt portion 76 is further nailed, stitched, or tacked all around insole 22 to provide the necessary mechanical grip to remove the pulling forces and allow the glue to properly set between skirt portion 76 and insole 22. Once skirt portion 76 is firmly attached to insole 22 and upper 12 has acquired its final shape, a light sanding of the folded skirt portion 76 is performed to partially even the lower surface of upper 12 and provide a flat surface on which outsole 24 can be glued or nailed.

The above description of preferred embodiments should not be interpreted in a limiting manner since other variations, modifications and refinements are possible within the spirit and scope of the present invention. The scope of the invention is defined in the appended claims.

## Claims

1. A lasted skate boot (10) comprising an upper (12) for enclosing a human foot, the foot having a heel, an Achilles tendon having an upper part and a lower part that projects outwardly with relation to the upper part, the lower part merging with the heel, the foot also comprising an ankle with a medial malleolus and a lateral malleolus, a plantar surface, medial and lateral sides and toes, said upper comprising an outer shell (14) and an inner lining (16) mounted inside said outer shell, said inner lining comprising a surface facing the heel, the ankle and the medial and lateral sides of the foot, said inner lining being less rigid than said outer shell;
said outer shell (14) is made of a thermoformable synthetic material and comprises:
(a) a heel counter (42) for receiving the heel of the foot;
(b) an ankle portion (44) for receiving the ankle; and
(c) medial and lateral quarters (58, 60) for receiving the medial and lateral sides of the foot respectively, said medial and lateral quarters (58, 60) extending forwardly from said heel counter (42) and said ankle portion (44), said medial and lateral quarters (58, 60) having respective inner surfaces (58IS, 60IS) and outer surfaces (58OS, 60OS), at least one of said medial and lateral quarters (58, 60) comprising reinforcing elements (62), said skate boot (10) being **characterized in that**: each of said reinforcing elements (62) having a ridge (64) formed on one of said inner surfaces (58IS, 60IS) or outer surfaces (58OS, 60OS) and a groove (66) registering with said ridge (64) on the other of said inner surfaces (58IS, 60IS) or outer surfaces (58OS, 60OS).

2. A lasted skate boot as defined in claim 1, wherein said ankle portion (44) comprises medial and lateral sides (50, 52) facing the medial malleolus and the lateral malleolus, said medial and lateral sides (50, 52) having respective inner surfaces (50IS, 52IS) and outer surfaces (50OS, 52OS), at least one of said medial and lateral sides (50, 52) comprising reinforcing elements (68), each of said reinforcing elements (68) having a ridge (70) formed on one of said inner surfaces (50IS, 52IS) or outer surfaces (50OS, 52OS) and a groove (72) registering with said ridge (70) on the other of said inner surfaces (50IS, 52IS) or outer surfaces (50OS, 52OS).

3. A lasted skate boot as defined in claim 1 or 2, wherein said heel counter (42) comprises an inner surface and an outer surface, said heel counter further comprising reinforcing elements (74) having a ridge formed on one of said inner or outer surfaces and a groove registering with said ridge on the other of said inner or outer surfaces.

4. A lasted skate boot as defined in any one of claims 1 to 3, wherein said ankle portion (44) comprises an upper part (46) and a lower part (48) that projects outwardly with relation to said upper part (46), said lower part (48) merging with said heel counter (42), said upper part (46) following the upper part of the Achilles tendon and said lower part (48) following the lower part of the Achilles tendon.

5. A lasted skate boot as defined in any one of claims 1 to 4, wherein said ankle portion (44) comprises a lateral depression (56) for receiving the lateral malleolus and a medial depression (54) for receiving the medial malleolus.

6. A lasted skate boot as defined in claim 5, wherein said lateral depression (56) is below said medial depression (54).

7. A lasted skate boot as defined in any one of claims 1 to 6 further comprising an insole (22) facing the plantar surface of the foot.

8. A lasted skate boot as defined in any one of claims 1 to 7, wherein said outer shell (14) comprises a lower skirt portion (76) that is foldable to overlap a portion of said insole (22).

9. A lasted skate boot as defined in any one of claims 1 to 8 further comprising a toe box (30) facing the toes of the foot.

10. A lasted skate boot as defined in claim 9 further comprising a tongue (28) extending upwardly and rearwardly from said toe box (30).

11. A lasted skate boot as defined in any one of claims 1 to 10, wherein said upper (12) further comprising a protective overlay covering a portion of said outer shell (14).

12. A lasted skate boot as defined in any one of claims 1 to 11, wherein said outer shell (14) is made of a homogenous synthetic material.

13. A lasted skate boot as defined in any one of claims 1 to 12, wherein said outer shell (14) comprises an outer layer and an inner layer, said outer layer being more rigid than said inner layer.

14. A lasted skate boot as defined in any one of claims 1 to 13 further comprising lacing members (36) disposed in an upper portion of said medial and lateral quarters (58, 60) and a rear cover (39) secured to a rear portion of said outer shell (14).

15. An ice skate comprising the lasted skate boot (10) as defined in any one of claims 1 to 14.

16. An in-line roller skate comprising the lasted skate boot (10) as defined in any one of claims 1 to 14.

17. A method of making a lasted skate boot (10) comprising an upper (12) for enclosing a human foot, the foot having a heel, an Achilles tendon having an upper part and a lower part that projects outwardly with relation to the upper part, the lower part merging with the heel, the foot also comprising an ankle with a medial malleolus and a lateral malleolus, a plantar surface, medial and lateral sides and toes, said method comprising providing a sheet of thermoformable synthetic material and thermoforming said sheet of synthetic thermoformable material to form an outer shell (14) comprising a heel counter (42) for receiving the heel of the foot; an ankle portion (44) comprising medial and lateral sides (50, 52) facing the medial malleolus and the lateral malleolus of the ankle, said medial and lateral sides (50, 52) having respective inner surfaces (50IS, 52IS) and outer surfaces (50OS, 52OS); and medial and lateral quarters (58, 60) for receiving the medial and lateral sides of the foot respectively, said medial and lateral quarters (58, 60) extending forwardly from said heel counter and said ankle portion, said medial and lateral quarters (58, 60) having respective inner surfaces (58IS, 60IS) and outer surfaces (58OS, 60OS); wherin
said medial and lateral quarters (58, 60) or ankle portion (44) are thermoformed such that said medial and lateral quarters (58, 60) comprise a ridge (64) formed on one of said inner surfaces (58IS, 60IS) or outer surfaces (58OS, 60OS) and a groove (66) registering with said ridge (64) on the other of said inner surfaces (58IS, 60IS) or outer surfaces (58OS, 60OS); or said ankle portion (44) comprises a ridge (70) formed on one of said inner surfaces (50IS, 52IS) or outer surfaces (50OS, 52OS) and a groove (72) registering with said ridge (70) on the other of said inner surfaces (50IS, 52IS) or outer surfaces (50OS, 52OS).

18. A method as defined in claim 17, wherein said method comprises thermoforming said heel counter (42) such that it comprises reinforcing elements (74) having a ridge formed on one of its inner or outer surfaces and a groove registering with said ridge on the other of the inner or outer surfaces.

19. A method as defined in claim 17 or 18, wherein said method comprises thermoforming said ankle portion (44) such that it comprises an upper part (46) and a lower part (48) that projects outwardly with relation to said upper part (46), said lower part (48) merging with said heel counter (42), said upper part (46) following the upper part of the Achilles tendon and said lower part (48) following the lower part of the Achilles tendon.

20. A method as defined in claim 19, wherein said method comprises thermoforming said ankle portion (44) such that it comprises a lateral depression (56) for receiving the lateral malleolus and a medial depression (54) for receiving the medial malleolus.

21. A method as defined in claim 20, wherein said method comprises thermoforming said ankle portion (44) such that said lateral depression (56) is below said medial depression (54).

22. A method as defined in any one of claims 17 to 21, wherein heat and pressure are applied simultaneously during the thermoforming step.

23. A method as defined in claim 22, wherein the applied heat is between 121°C and 177°C and the applied pressure is between 517Kpa and 1034Kpa.

24. A method as defined in any one of claims 17 to 23 further comprising thermoforming said sheet of thermoformable material such that said outer shell (14) comprises a foldable lower skirt portion (76).

25. A method as defined in claim 24 further comprising folding said lower skirt portion (76) over the bottom surface of an insole (22) and affixing said lower skirt portion (76) to said insole (22).

26. A method as defined in claim 25 further comprising securing an outsole (24) to said insole (22).

27. A method as defined in any one of claims 17 to 26 further comprising securing an inner lining (16) to said outer shell (14).

## Revendications

1. Bottine de patin (10) mise en forme, comprenant une empeigne (12) pour emprisonner un pied humain, ledit pied comprenant un talon, un tendon d'Achille comportant une partie supérieure et une partie inférieure faisant saillie vers l'extérieur par rapport à la partie supérieure, la partie inférieure fusionnant dans le talon, ledit pied comprenant également une cheville comportant une malléole médiale et une malléole latérale, une surface plantaire, des régions médiale et latérale, et des orteils, ladite empeigne comprenant une coque extérieure (14) et un garnissage intérieur (16) monté à l'intérieur de ladite coque extérieure, ledit garnissage intérieur présentant une surface tournée vers le talon, la cheville, et les régions médiale et latérale du pied, ledit garnissage intérieur étant moins rigide que ladite coque extérieure ;
ladite coque extérieure (14) étant fabriquée en un matériau synthétique thermoformable, et comprenant :
(a) un contrefort de talon (42) pour recevoir le talon du pied ;
(b) une tige (44) pour recevoir la cheville ; et
(c) des quartiers médial et latéral (58, 60) pour recevoir respectivement les régions médiale et latérale du pied, lesdits quartiers médial et latéral (58, 60) s'étendant vers l'avant depuis ledit contrefort (42) et ladite tige (44), lesdits quartiers médial et latéral (58, 60) possédant respectivement des surfaces intérieures (58IS, 60IS) et des surfaces extérieures (58OS, 60OS), au moins l'un desdits quartiers médial et latéral (58, 60) comprenant des éléments de renfort (62), ladite bottine de patin (10) étant **caractérisée par le fait que** chacun desdits éléments de renfort (62) présente une nervure (64) formée sur l'une desdites surfaces intérieures (58IS, 60IS) ou surfaces extérieures (58OS, 60OS), et une rainure (66) alignée avec ladite nervure (64) sur l'autre desdites surfaces intérieures (58IS, 60IS) ou surfaces extérieures (58OS, 60OS).

2. Bottine de patin mise en forme, selon la revendication 1, dans laquelle ladite tige (44) comprend des pans médial et latéral (50, 52) tournés vers la malléole médiale et la malléole latérale, lesdits pans médial et latéral (50, 52) présentant respectivement des surfaces intérieures (50IS, 52IS) et des surfaces extérieures (50OS, 52OS), au moins l'un desdits pans médial et latéral (50, 52) comprenant des éléments de renfort (68), chacun desdits éléments de renfort (68) comportant une nervure (70) formée sur l'une desdites surfaces intérieures (50IS, 52IS) ou surfaces extérieures (50OS, 52OS), et une rainure (72) alignée avec ladite nervure (70) sur l'autre desdites surfaces intérieures (50IS, 52IS) ou surfaces extérieures (50OS, 52OS).

3. Bottine de patin mise en forme, selon la revendication 1 ou 2, dans laquelle ledit contrefort (42) comprend une surface intérieure et une surface extérieure, ledit contrefort présentant, en outre, des éléments de renfort (74) munis d'une nervure formée sur l'une desdites surfaces intérieure ou extérieure, et une rainure alignée avec ladite nervure sur l'autre desdites surfaces intérieure ou extérieure.

4. Bottine de patin mise en forme, selon l'une quelconque des revendications 1 à 3, dans laquelle ladite tige (44) comprend une partie supérieure (46) et une partie inférieure (48) qui fait saillie vers l'extérieur par rapport à ladite partie supérieure (46), ladite partie inférieure (48) fusionnant dans ledit contrefort (42), ladite partie supérieure (46) suivant la partie supérieure du tendon d'Achille, et ladite partie inférieure (48) suivant la partie inférieure du tendon d'Achille.

5. Bottine de patin mise en forme, selon l'une quelconque des revendications 1 à 4, dans laquelle ladite tige (44) comprend un renfoncement latéral (56) pour recevoir la malléole latérale, et un renfoncement médial (54) pour recevoir la malléole médiale.

6. Bottine de patin mise en forme, selon la revendication 5, dans laquelle ledit renfoncement latéral (56) se trouve au-dessous dudit renfoncement médial (54).

7. Bottine de patin mise en forme, selon l'une quelconque des revendications 1 à 6, comprenant en outre une première (22) tournée vers la surface plantaire du pied.

8. Bottine de patin mise en forme, selon l'une quelconque des revendications 1 à 7, dans laquelle ladite coque extérieure (14) comprend une bordure inférieure (76) pouvant être repliée afin de chevaucher une partie de ladite première (22).

9. Bottine de patin mise en forme, selon l'une quelconque des revendications 1 à 8, comprenant en outre un bout (30) tourné vers les orteils du pied.

10. Bottine de patin mise en forme, selon la revendication 9, comprenant en outre une languette (28) s'étendant vers le haut et vers l'arrière à partir dudit bout (30).

11. Bottine de patin mise en forme, selon l'une quelconque des revendications 1 à 10, dans laquelle ladite empeigne (12) comprend, en outre, un recouvrement protecteur coiffant une partie de ladite coque extérieure (14).

12. Bottine de patin mise en forme, selon l'une quelconque des revendications 1 à 11, dans laquelle ladite coque extérieure (14) est fabriquée en un matériau synthétique homogène.

13. Bottine de patin mise en forme, selon l'une quelconque des revendications 1 à 12, dans laquelle ladite coque extérieure (14) comprend une couche extérieure et une couche intérieure, ladite couche extérieure étant plus rigide que ladite couche intérieure.

14. Bottine de patin mise en forme, selon l'une quelconque des revendications 1 à 13, comprenant en outre des pièces de laçage (36) disposées dans une région supérieure desdits quartiers médial et latéral (58, 60), et une emboîture (39) fixée à une région postérieure de ladite coque extérieure (14).

15. Patin à glace équipé de la bottine de patin (10) mise en forme, telle que définie dans l'une quelconque des revendications 1 à 14.

16. Patin à roulettes en ligne équipé de la bottine de patin (10) mise en forme, telle que définie dans l'une quelconque des revendications 1 à 14.

17. Procédé de fabrication d'une bottine de patin (10) mise en forme, comprenant une empeigne (12) pour emprisonner un pied humain, ledit pied comprenant un talon, un tendon d'Achille comportant une partie supérieure et une partie inférieure faisant saillie vers l'extérieur par rapport à la partie supérieure, la partie inférieure fusionnant dans le talon, ledit pied comprenant également une cheville comportant une malléole médiale et une malléole latérale, une surface plantaire, des régions médiale et latérale, et des orteils, ledit procédé consistant à fournir une plaque de matériau synthétique thermoformable, et à thermoformer ladite plaque de matériau thermoformable synthétique pour former une coque extérieure (14) comprenant un contrefort de talon (42) pour recevoir le talon du pied ; une tige (44) comprenant des pans médial et latéral (50, 52) tournés vers la malléole médiale et la malléole latérale de la cheville, lesdits pans médial et latéral (50, 52) présentant respectivement des surfaces intérieures (50IS, 52IS) et des surfaces extérieures (50OS, 52OS) ; et des quartiers médial et latéral (58, 60) pour recevoir respectivement les régions médiale et latérale du pied, lesdits quartiers médial et latéral (58, 60) s'étendant vers l'avant à partir dudit contrefort et de ladite tige, lesdits quartiers médial et latéral (58, 60) comportant respectivement des surfaces intérieures (58IS, 60IS) et des surfaces extérieures (58OS, 60OS), dans lequel
lesdits quartiers médial et latéral (58, 60) ou ladite tige (44) est (sont) thermoformés(ée) de telle sorte que lesdits quartiers médial et latéral (58, 60) comprennent une nervure (64) formée sur l'une desdites surfaces intérieures (58IS, 60IS) ou surfaces extérieures (58OS, 60OS), et une rainure (66) alignée avec ladite nervure (64) sur l'autre desdites surfaces intérieures (58IS, 60IS) ou surfaces extérieures (58OS, 60OS) ; ou que ladite tige (44) comprenne une nervure (70) formée sur l'une desdites surfaces intérieures (50IS, 52IS) ou surfaces extérieures (50OS, 52OS), et une rainure (72) alignée avec ladite nervure (70) sur l'autre desdites surfaces intérieures (50IS, 52IS) ou surfaces extérieures (50OS, 52OS).

18. Procédé selon la revendication 17, ledit procédé consistant à thermoformer ledit contrefort (42) de telle sorte qu'il comprenne des éléments de renfort (74) munis d'une nervure formée sur l'une de ses surfaces intérieure ou extérieure, et une rainure alignée avec ladite nervure sur l'autre desdites surfaces intérieure ou extérieure.

19. Procédé selon la revendication 17 ou 18, ledit procédé consistant à thermoformer ladite tige (44) de telle sorte qu'elle comprenne une partie supérieure (46) et une partie inférieure (48) qui fait saillie vers l'extérieur par rapport à ladite partie supérieure (46), ladite partie inférieure (48) fusionnant dans ledit contrefort (42), ladite partie supérieure (46) suivant la partie supérieure du tendon d'Achille, et ladite partie inférieure (48) suivant la partie inférieure du tendon d'Achille.

20. Procédé selon la revendication 19, ledit procédé consistant à thermoformer ladite tige (44) de telle sorte qu'elle comprenne un renfoncement latéral (56) pour recevoir la malléole latérale, et un renfoncement médial (54) pour recevoir la malléole médiale.

21. Procédé selon la revendication 20, ledit procédé consistant à thermoformer ladite tige (44) de telle sorte que ledit renfoncement latéral (56) se trouve au-dessous dudit renfoncement médial (54).

22. Procédé selon l'une quelconque des revendications 17 à 21, dans lequel une chaleur et une pression sont appliquées simultanément au cours de l'étape de thermoformage.

23. Procédé selon la revendication 22, dans lequel la chaleur appliquée se situe entre 121°C et 177°C, et la pression exercée se situe entre 517 KPa et 1034 KPa.

24. Procédé selon l'une quelconque des revendications 17 à 23, consistant en outre à thermoformer ladite plaque de matériau thermoformable de façon telle que ladite coque extérieure (14) comprenne une bordure inférieure repliable (76).

25. Procédé selon la revendication 24, consistant en outre à replier ladite bordure inférieure (76) au-dessus de la surface inférieure d'une première (22), et à fixer ladite bordure inférieure (76) à ladite première (22).

26. Procédé selon la revendication 25, consistant en outre à fixer une semelle extérieure (24) à ladite première (22).

27. Procédé selon l'une quelconque des revendications 17 à 26, consistant en outre à fixer un garnissage intérieur (16) à ladite coque extérieure (14).

## Patentansprüche

1. Leistengeformter Schlittschuh- bzw. Inline-Skate-Stiefel (10), der Folgendes aufweist:
einen Schaft (12), der einen menschlichen Fuß umschließt, wobei der Fuß eine Ferse, eine Achillessehne mit einem oberen Teil und einem unteren Teil, der in Bezug auf den oberen Teil nach außen übersteht, wobei der untere Teil in die Ferse übergeht, aufweist, wobei der Fuß außerdem einen Knöchel mit einem Innenknöchel und einem Außenknöchel, eine Sohlenfläche, eine mediale und eine laterale Seite und Zehen aufweist,
wobei der Schaft eine Außenschale (14) und ein Futter (16), das an der Innenseite der Außenschale angebracht ist, aufweist,
wobei das Futter eine der Ferse, dem Knöchel und der medialen sowie der lateralen Seite des Fußes zugewandte Oberfläche aufweist, wobei das Futter weniger steif als die Außenschale ist;
wobei die Außenschale (14) aus einem warmformbaren Kunststoff hergestellt ist und Folgendes aufweist:
(a) eine Fersenversteifung (42) für die Aufnahme der Ferse des Fußes;
(b) einen Knöchelabschnitt (44) für die Aufnahme des Knöchels; und
(c) ein mediales Teil (58) und ein laterales Teil (60) für die Aufnahme der medialen bzw. der lateralen Seite des Fußes, wobei sich das mediale Teil (58) und das laterale Teil (60) von der Fersenversteifung (42) und dem Knöchelabschnitt (44) nach vorn erstrecken, wobei das mediale und das laterale Teil (58, 60) jeweilige innere Oberflächen (58IS, 60IS) und äußere Oberflächen (58OS, 60OS) haben, wobei mindestens eines, das mediale Teil (58) oder das laterale Teil (60), Versteifungselemente (62) aufweist,
wobei der Schlittschuh- bzw. Inline-Skate-Stiefel (10) **dadurch gekennzeichnet ist, dass**
jedes der Versteifungselemente (62) eine Rippe (64) aufweist, die an einer der inneren Oberflächen (58IS, 60IS) oder äußeren Oberflächen (58OS, 60OS) ausgebildet ist, und eine Rille (66), die der Rippe (64) an der anderen der inneren Oberflächen (58IS, 60IS) oder äußeren Oberflächen (58OS, 60OS) zugeordnet ist.

2. Leistengeformter Schlittschuh- bzw. Inline-Skate-Stiefel nach Anspruch 1, wobei der Knöchelabschnitt (44) eine mediale Seite (50), die dem Innenknöchel zugewandt ist, und eine laterale Seite (52), die dem Außenknöchel zugewandt ist, aufweist,
wobei die mediale und die laterale Seite (50, 52) jeweilige innere Oberflächen (50IS, 52IS) und äußere Oberflächen (50OS, 52OS) haben, wobei mindestens eine, die mediale Seite (50) oder die laterale Seite (52), Versteifungselemente (68) aufweist,
wobei jedes der Versteifungselemente (68) eine Rippe (70), die an einer der inneren Oberflächen (50IS, 52IS) oder äußeren Oberflächen (50OS, 52OS) ausgebildet ist, und eine Rille (72), die der Rippe (70) an der anderen der inneren Oberflächen (50IS, 52IS) oder äußeren Oberflächen (50OS, 52OS) zugeordnet ist, aufweist.

3. Leistengeformter Schlittschuh- bzw. Inline-Skate-Stiefel nach Anspruch 1 oder 2, wobei die Fersenversteifung (42) eine innere Oberfläche und eine äußere Oberfläche aufweist, die Fersenversteifung ferner Versteifungselemente (74) mit einer Rippe, die auf einer, der inneren oder der äußeren Oberfläche, ausgebildet ist, und einer Rille, die der Rippe an der anderen der inneren oder äußeren Oberflächen zugeordnet ist, aufweist.

4. Leistengeformter Schlittschuh- bzw. Inline-Skate-Stiefel nach einem der Ansprüche 1 bis 3, wobei der Knöchelabschnitt (44) einen oberen Teil (46) und einen unteren Teil (48), der in Bezug auf den oberen Teil (46) nach außen vorsteht, aufweist, wobei der untere Teil (48) in die Fersenversteifung (42) übergeht, der obere Teil (46) dem oberen Teil der Achillessehne folgt und der untere Teil (48) dem unteren Teil der Achillessehne folgt.

5. Leistengeformter Schlittschuh- bzw. Inline-Skate-Stiefel nach einem der Ansprüche 1 bis 4, wobei der Knöchelabschnitt (44) eine laterale Mulde (56) für die Aufnahme des Außenknöchels und eine mediale Mulde (54) für die Aufnahme des Innenknöchels aufweist.

6. Leistengeformter Schlittschuh- bzw. Inline-Skate-Stiefel nach Anspruch 5, wobei die laterale Mulde (56) unterhalb der medialen Mulde (54) ist.

7. Leistengeformter Schlittschuh- bzw. Inline-Skate-Stiefel nach einem der Ansprüche 1 bis 6, ferner eine Einlegesohle (22) aufweisend, die der Sohlenfläche des Fußes zugewandt ist.

8. Leistengeformter Schlittschuh- bzw. Inline-Skate-Stiefel nach einem der Ansprüche 1 bis 7, wobei die Außenschale (14) einen unteren Randabschnitt (76) aufweist, der so faltbar ist, dass er einen Teil der Einlegesohle 22 überlappt.

9. Leistengeformter Schlittschuh- bzw. Inline-Skate-Stiefel nach einem der Ansprüche 1 bis 8, ferner eine Zehenkappe(30) aufweisend, die den Zehen des Fußes zugewandt ist.

10. Leistengeformter Schlittschuh- bzw. Inline-Skate-Stiefel nach Anspruch 9, ferner eine Zunge (28) aufweisend, die sich von der Zehenkappe (30) nach oben und hinten erstreckt.

11. Leistengeformter Schlittschuh- bzw. Inline-Skate-Stiefel nach einem der Ansprüche 1 bis 10, wobei der Schaft (12) ferner einen Schutzüberzug aufweist, der einen Teil der Außenschale (14) bedeckt.

12. Leistengeformter Schlittschuh- bzw. Inline-Skate-Stiefel nach einem der Ansprüche 1 bis 11, wobei die Außenschale (14) aus einem homogenen synthetischen Material hergestellt ist.

13. Leistengeformter Schlittschuh- bzw. Inline-Skate-Stiefel nach einem der Ansprüche 1 bis 12, wobei die Außenschale (14) eine Außenschicht und eine Innenschicht aufweist, wobei die Außenschicht steifer als die Innenschicht ist.

14. Leistengeformter Schlittschuh- bzw. Inline-Skate-Stiefel nach einem der Ansprüche 1 bis 13, ferner Schnürelemente (36), die in einem oberen Abschnitt des medialen Teils (58) und des lateralen Teils (60) angeordnet sind, und eine rückwärtige Abdeckung (39), die an einem hinteren Abschnitt der Außenschale (14) befestigt ist, aufweisend.

15. Schlittschuh, den gezwickten Stiefel (10) nach einem der Ansprüche 1 bis 14 aufweisend.

16. Inline-Skate, den gezwickten Stiefel (10) nach einem der Ansprüche 1 bis 14 aufweisend.

17. Verfahren zur Herstellung eines gezwickten Schlittschuh- bzw. Inline-Skate-Stiefels mit einem Schaft (12), der einen menschlichen Fuß umschließt,
wobei der Fuß eine Ferse, eine Achillessehne mit einem oberen Teil und einem unteren Teil, der in Bezug auf den oberen Teil nach außen übersteht, wobei der untere Teil in die Ferse übergeht, aufweist, wobei der Fuß außerdem einen Knöchel mit einem Innenknöchel und einem Außenknöchel, eine Sohlenfläche, eine mediale und eine laterale Seite und Zehen aufweist,
wobei das Verfahren Folgendes umfasst:
Bereitstellen einer Lage aus warmformbarem synthetischen Material und Warmformen der Lage aus warmformbarem Kunststoff, um eine Außenschale (14) zu bilden, die Folgendes aufweist: eine Fersenversteifung (42) für die Aufnahme der Ferse des Fußes; einen Knöchelabschnitt (44), der eine mediale Seite (50), die dem Innenknöchel zugewandt ist, und eine laterale Seite (52), die dem Außenknöchel zugewandt ist, aufweist, wobei die mediale Seite (50) und die laterale Seite (52) jeweilige innere Oberflächen (50IS, 52IS) und äußere Oberflächen (50OS, 52OS) haben; und ein mediales Teil (58) und ein laterales Teil (60) für die Aufnahme der medialen bzw. der lateralen Seite des Fußes, wobei sich das mediale und das laterale Teil (58, 60) von der Fersenversteifung und dem Knöchelabschnitt nach vorn erstrecken, wobei das mediale und das laterale Teil (58, 60) jeweilige innere Oberflächen (58IS, 60IS) und äußere Oberflächen (58OS, 60OS) haben,
wobei das mediale und das laterale Teil (58, 60) oder der Knöchelabschnitt (44) warmgeformt werden, derart, dass das mediale und das laterale Teil (58, 60) eine Rippe (64), die an einer der inneren Oberflächen (58IS, 60IS) oder äußeren Oberflächen (58OS, 60OS) ausgebildet ist, und eine Rille (66), die der Rippe (64) an der anderen der inneren Oberflächen (58IS, 60IS) oder äußeren Oberflächen (58OS, 60OS) zugeordnet ist, aufweist oder der Knöchelabschnitt (44) eine Rippe (70), die an einer der inneren Oberflächen (50IS, 52IS) oder äußeren Oberflächen (50OS, 52OS) ausgebildet ist, und eine Rille (72), die der Rippe (70) an der anderen der inneren Oberflächen (50IS, 52IS) oder äußeren Oberflächen (50OS, 52OS) zugeordnet ist, aufweist.

18. Verfahren nach Anspruch 17, wobei das Verfahren das Warmformen der Fersenversteifung (42) umfasst, derart, dass sie Versteifungselemente (74) aufweist, die eine Rippe, die an einer ihrer Oberflächen, der inneren oder der äußeren Oberfläche, ausgebildet ist, und eine Rille, die der Rippe an der anderen Oberfläche, der inneren oder der äußeren Oberfläche zugeordnet ist, haben.

19. Verfahren nach Anspruch 17 oder 18, wobei das Verfahren ein Warmformen des Knöchelabschnitts (44) umfasst, derart, dass er einen oberen Teil (46) und einen unteren Teil (48), der in Bezug auf den oberen Teil (46) nach außen vorsteht, aufweist, wobei der untere Teil (48) in die Fersenversteifung (42) übergeht, der obere Teil (46) dem oberen Teil der Achillessehne folgt und der untere Teil (48) dem unteren Teil der Achillessehne folgt.

20. Verfahren nach Anspruch 19, wobei das Verfahren das Warmformen des Knöchelabschnitts (44) umfasst, derart, dass er eine laterale Mulde (56) für die Aufnahme des Außenknöchels und eine mediale Mulde (54) für die Aufnahme des Innenknöchels aufweist.

21. Verfahren nach Anspruch 20, wobei das Verfahren das Warmformen des Knöchelabschnitts (44) umfasst, derart, dass die laterale Mulde (56) unter der medialen Mulde (54) ist.

22. Verfahren nach einem der Ansprüche 17 bis 21, wobei während des Warmformschrittes Wärme und Druck gleichzeitig angewandt werden.

23. Verfahren nach Anspruch 22, wobei die angewandte Wärme zwischen 121 °C und 177 °C und der angewandte Druck zwischen 517 kPa und 1034 kPa ist.

24. Verfahren nach einem der Ansprüche 17 bis 23, ferner ein Warmformen der Lage aus warmformbarem Material umfassend, derart, dass die Außenschale (14) einen faltbaren unteren Randabschnitt (76) aufweist.

25. Verfahren nach Anspruch 24, ferner das Falten des unteren Randabschnitts (76) über die untere Fläche einer Einlegesohle (22) und das Befestigen des unteren Randabschnitts (76) an der Einlegesohle (22) umfassend.

26. Verfahren nach Anspruch 25, ferner das Befestigen einer Laufsohle (24) an der Einlegesohle (22) umfassend.

27. Verfahren nach einem der Ansprüche 17 bis 26, ferner das Befestigen eines Futters (16) an der Außenschale (14) umfassend.
